# EUROPÄISCHE PATENTSCHRIFT

(11) **EP 1 912 816 B1**
(45) Veröffentlichungstag und Bekanntmachung des Hinweises auf die Patenterteilung: **22.09.2010**
(21) Anmeldenummer: 06776179.1
(22) Anmeldetag: 11.07.2006
(51) Int. Cl.: B60K 1/00

(54) **VERFAHREN ZUR STEUERUNG EINES GURTSTRAFFERS UND SICHERHEITSANORDNUNG MIT EINEM GURTSTRAFFER**
METHOD FOR CONTROLLING A BELT PRETENSIONER AND SAFETY ARRANGMENT COMPRISING A BELT PRETENSIONER
PROCEDE DE COMMANDE D'UN PRETENSIONNEUR DE CEINTURE ET SYSTEME DE SECURITE D'UN PRETENSIONNEUR DE CEINTURE

(30) Priorität: 30.07.2005 DE 102005035862
(43) Veröffentlichungstag der Anmeldung: 23.04.2008
(73) Patentinhaber: GM Global Technology Operations, Inc., Detroit, MI 48265-3000 (US)
(72) Erfinder: BAUER, Klaus, 55545 Bad Kreuznach (DE); HESSE, Simon, 67593 Westhofen (DE); KETTERN-KOHLER, Horst, 74722 Buchen (DE); RICK, Ulrich, 55595 Roxheim (DE)
(74) Vertreter: Strauss, Peter
(86) Internationale Anmeldenummer: PCT/EP2006/006748
(87) Internationale Veröffentlichungsnummer: WO 2007/014627

(56) Entgegenhaltungen:
- DE-A1- 10 029 061
- DE-A1- 10 344 835
- DE-A1- 10 345 726
- DE-A1- 19 811 865
- DE-A1- 19 961 799
- DE-C1- 10 121 386

## Beschreibung

Die vorliegende Erfindung betrifft ein Verfahren zur Steuerung eines reversiblen Gurtstraffers in einem Kraftfahrzeug. Die Erfindung betrifft ferner eine Sicherheitsanordnung für ein Kraftfahrzeug mit einem reversiblen Gurtstraffer.

Aus dem Stand der Technik sind unterschiedliche Sicherheitsanordnungen für Kraftfahrzeuge bekannt. Diese umfassen regelmäßig einen Aufwickelmechanismus zum automatischen Aufwickeln eines Sicherheitsgurtes um eine Gurtspule. Durch das automatische Aufwickeln wird erreicht, dass der angelegte Sicherheitsgurt locker und komfortabel an dem Körper des Fahrzeuginsassen anliegt und bei Nichtgebrauch des Sicherheitsgurtes um die Gurtspule aufgerollt ist. Das Abwickeln des Sicherheitsgurtes ist bei angelegtem Sicherheitsgurt leicht möglich, so dass die Bewegungsfreiheit des Fahrzeuginsassen gewährleistet ist.

Ferner sind bei den bekannten Sicherheitsanordnungen so genannte Gurtstraffer vorgesehen. Die Gurtstraffer bewirken eine Straffung des Sicherheitsgurtes, um den Fahrzeuginsassen gegen die Rückenlehne des Fahrzeugsitzes zu ziehen, so dass die Verletzungsgefahr im Falle eines Zusammenpralls des Fahrzeuges mit einem anderen Fahrzeug oder einem Verkehrshindernis verringert ist. Die bekannten Gurtstraffer können dabei in irreversible und reversible Gurtstraffer unterteilt werden. Der irreversible Gurtstraffer wird erst dann aktiviert, wenn es bereits zu einem Unfall, wie beispielsweise einem Zusammenprall mit einem anderen Fahrzeug gekommen ist. Crashsensoren ermitteln den Zusammenprall und entsenden ein entsprechendes Aktivierungssignal an den irreversiblen Gurtstraffer. Die irreversiblen Gurtstraffer können stets nur einmal aktiviert bzw. ausgelöst werden, da es ja definitiv zu einem Unfall gekommen ist. Die reversiblen Gurtstraffer sollen hingegen mehrmals, auch schnell hintereinander, auf Grund von Signalen ausgelöst werden können, die die Möglichkeit eines bevorstehenden Crashs andeuten. Das heißt, die reversiblen Gurtstraffer sollen immer dann aktiviert werden können, wenn ein Crash möglich oder wahrscheinlich ist, aber noch nicht stattgefunden hat bzw. festgestellt wurde.

Eine kritische Fahrsituation wird bei den reversiblen Gurtstraffern nicht durch Crashsensoren, die lediglich den tatsächlich stattgefundenen Crash ermitteln, sondern durch Fahrdynamiksensoren ermittelt, die Informationen über den derzeitigen Bewegungszustand des Kraftfahrzeuges liefern. Hierzu gehört beispielsweise die Ermittlung der Längs-, Quer- und Vertikalbeschleunigung des Kraftfahrzeuges. Sollten diese gemessenen Werte einen Grenzwert überschreiten, so erfolgt die prophylaktische Aktivierung des reversiblen Gurtstraffers. Sollte der Grenzwert wieder unterschritten werden und tatsächlich kein Crash stattgefunden haben, so wird der reversible Gurtstraffer wieder deaktiviert, so dass der Sicherheitsgurt wieder in seine Normalstellung gebracht werden kann, in der dem Fahrzeuginsassen eine größere Bewegungsfreiheit eingeräumt ist. Bei der nächsten kritischen Fahrsituation ist es möglich, den reversiblen Gurtstraffer erneut zu aktivieren.

Die DE 199 61 799 B4 beschreibt ein Sicherheitsgurtsystem mit einem reversiblen Gurtstraffer. Der bekannte reversible Gurtstraffer verfügt über einen elektromotorischen Antrieb, der in Abhängigkeit von einer aus Sensorsignalen abgeleiteten Wahrscheinlichkeit einer Unfallsituation den Sicherheitsgurt in eine Sicherheitszwischenstellung mit einer bestimmten Zugkraft reversibel vorspannt. Die von der nicht näher erläuterten Precrash-Sensorik erfasste kritische Fahrsituation, die zu einer Aktivierung des Gurtstraffers führt, kann beispielsweise ein Schleudern, eine Vollbremsung usw. sein.

Die DE 103 45 726 A1 beschreibt ein Rückhaltesystem zum Zurückhalten eines Insassen in einem Fahrzeug. Das bekannte Rückhaltesystem verfügt über einen reversiblen Gurtstraffer, der über ein Steuergerät gesteuert wird. Das Steuergerät steht mit einer Fahrzeugsituations-Erfassungseinrichtung zum dynamischen Erfassen von Fahrzeugsituationsdaten, wie beispielsweise der Querbeschleunigung des Fahrzeuges, und einer Insassen-Parameter-Erfassungseinrichtung zum dynamischen Erfassen von Insassen-Parameter-Daten, wie beispielsweise dem Gewicht des Insassen, in Verbindung. Der Gurtstraffer wird in Abhängigkeit von den ermittelten Fahrzeugsituationsdaten und Insassen-Parameter-Daten gesteuert.

Die DE 102 30 483 A1 beschreibt ein Verfahren zur Ansteuerung eines zweistufigen irreversiblen Gurtstraffers. Bei dem bekannten Verfahren wird die Längsbeschleunigung des Kraftfahrzeuges erfasst und einer Integration unterzogen, wobei das Integral der Beschleunigung mit einer Auslöseschwelle verglichen wird. Ist dies Auslöseschwelle überschritten, wird der irreversible Gurtstraffer ausgelöst.

Die DE 103 32 024 A1 beschreibt ein Verfahren zur Ansteuerung eines reversiblen Gurtstraffers zum Lösen einer von einem Beschleunigungssensor aktivierbaren Gurtauszugssperre eines Rückhaltegurts in einem Kraftfahrzeug. Als Lösezeitpunkt für die Gurtauszugssperre ist ein Zeitpunkt festgelegt, zu dem die erfasste Beschleunigung einen Beschleunigungsschwellwert unterschreitet.

DE19811865 wird als nächstliegender Stand der Technik gegenüber dem Gegenstand des unabhängigen Anspruchs 1 angesehen. Es offenbart ein Verfahren zur Steuerung eines reversiblen Gurtstraffers in einem Kraftfahrzeug mit den Verfahrensschritten:
- Erfassen der Geschwindigkeit und des Lenkwinkels des Kraftfahrzeuges,
- Berechnen einer erwarteten Drehrate des Kraftfahrzeuges um dessen Vertikalachse aus der Geschwindigkeit und dem Lenkwinkel, und
- Erfassen der tatsächlichen Drehrate des Kraftfahrzeuges um dessen Vertikalachse. D1 offenbart ebenfalls alle Merkmale des Oberbegriffs des unabhängigen Anspruchs 8, nämlich eine Sicherheitsanordnung für ein Kraftfahrzeug mit einem Sicherheitsgurt, einem reversiblen Gurtstraffer, einer Erfassungseinrichtung zum Erfassen der Geschwindigkeit, des Lenkwinkels und der tatsächlichen Drehrate des Kraftfahrzeuges und einer Steuereinrichtung, mittels derer der Gurtstraffer aktivierbar und deaktivierbar ist.

Die bekannten Verfahren zur Steuerung eines reversiblen Gurtstraffers haben sich bewährt, jedoch findet keine geeignete Ansteuerung des Gurtstraffers bei gefährlichen Lenkmanövern statt, so dass die Sicherheit des Fahrzeuginsassen bei gefährlichen Lenkmanövern verbesserungswürdig ist.

Es ist daher eine Aufgabe der vorliegenden Erfindung, ein Verfahren zur Steuerung eines reversiblen Gurtstraffers in einem Kraftfahrzeug anzugeben, das eine geeignete Ansteuerung des Gurtstraffers bei gefährlichen Lenkmanövern ermöglicht, so dass die Sicherheit des Fahrzeuginsassen erhöht ist. Der Erfindung liegt ferner die Aufgabe zu Grunde, eine Sicherheitsanordnung mit einem reversiblen Gurtstraffer zu schaffen, mit der das erfindungsgemäße Verfahren ausführbar ist.

Diese Aufgabe wird durch die in den Patentansprüchen 1 bzw. 8 angegebenen Merkmale gelöst. Vorteilhafte Ausführungsformen der Erfindung sind Gegenstand der Unteransprüche.

Das erfindungsgemäße Verfahren zur Steuerung eines reversiblen Gurtstraffers in einem Kraftfahrzeug weist die folgenden Verfahrensschritte auf. Zunächst wird die Geschwindigkeit des Kraftfahrzeuges sowie und der Lenkwinkel des Kraftfahrzeuges erfasst. Anschließend wird an Hand der erfassten Geschwindigkeit und des Lenkwinkels eine erwartete Drehrate des Kraftfahrzeuges um dessen Vertikalachse berechnet. Hierbei kann beispielsweise von dem Idealfall ausgegangen werden, bei dem der Lenkwinkel exakt in den gewünschten Kurvenverlauf umgesetzt wird, ohne dass es zu einem Über- oder Untersteuern kommt. die erwartete Drehrate kann beispielsweise die Winkelgeschwindigkeit bezogen auf eine Drehung um die Vertikalachse sein. Anschließend wird an Hand der berechneten erwarteten Drehrate ein oberer und unterer Drehratengrenzwert berechnet. Dies kann beispielsweise mit Hilfe eines Toleranzfaktors für den oberen bzw. den unteren Drehratengrenzwert erfolgen. Danach wird die tatsächliche Drehrate des Kraftfahrzeuges um dessen Vertikalachse erfasst. Nun erfolgt ein Vergleich zwischen der tatsächlichen Drehrate und dem oberen bzw. unteren Drehratengrenzwert. Ist die tatsächliche Drehrate des Kraftfahrzeuges größer als der obere Drehratengrenzwert oder kleiner als der untere Drehratengrenzwert, so wird der Gurtstraffer aktiviert.

Das erfindungsgemäße Verfahren führt zu einem situationsgerechten Ansteuern des Gurtstraffers bei gefährlichen Lenkmanövern. So wird ein Über- oder Untersteuern des Kraftfahrzeuges durch Überschreiten bzw. Unterschreiten des oberen bzw. unteren Drehratengrenzwertes sicher erfasst, und führt zur Aktivierung des Gurtstraffers.

In einer bevorzugten Ausführungsform des erfindungsgemäßen Verfahrens erfolgt das Aktivieren des Gurtstraffers ferner erst dann, wenn die tatsächliche Drehrate des Kraftfahrzeuges für eine vorbestimmte Zeitdauer größer bzw. kleiner als der obere bzw. untere Drehratengrenzwert ist. Auf diese Weise ist sichergestellt, dass die Straffung des Sicherheitsgurtes erst bei einem tatsächlich gefährlichen Lenkmanöver erfolgt. Ein solches gefährliches Lenkmanöver liegt nämlich bei einem nur kurzzeitigen Über- bzw. Unterschreiten der Drehratengrenzwerte in der Regel nicht vor.

In einer vorteilhaften Ausführungsform des erfindungsgemäßen Verfahrens wird die vorbestimmte Zeitdauer in Abhängigkeit von der Geschwindigkeit des Kraftfahrzeuges festgelegt. Durch diese Maßnahme kann eine weitere Vorauswahl vorgenommen werden, ob tatsächlich ein gefährliches Lenkmanöver vorliegt.

In einer besonders vorteilhaften Ausführungsform des erfindungsgemäßen Verfahrens ist die vorbestimmte Zeitdauer geringer, je höher die Geschwindigkeit des Kraftfahrzeuges ist. Hierdurch wird der Tatsache Rechnung getragen, dass ein kurzzeitiges Über- oder Untersteuern bei einer hohen Geschwindigkeit des Kraftfahrzeuges gefährlicher ist als ein kurzzeitiges Über- oder Untersteuern bei einer geringen Geschwindigkeit. Die vorbestimmte Zeitdauer kann bei steigender Geschwindigkeit beispielsweise linear oder stufenweise absinken.

Da ein Über- oder Untersteuern bei niedrigen Geschwindigkeiten des Kraftfahrzeuges regelmäßig keine gefährliche Situation darstellt, erfolgt in einer besonders bevorzugten Ausführungsform des erfindungsgemäßen Verfahrens das Aktivieren des Gurtstraffers ferner erst dann, wenn die Geschwindigkeit des Kraftfahrzeuges höher als ein vorbestimmter Geschwindigkeitsgrenzwert ist. Dieser könnte beispielsweise bei 40 km/h festgelegt werden.

In einer besonders bevorzugten Ausführungsform des erfindungsgemäßen Verfahrens wird der obere bzw. untere Drehratengrenzwert durch Multiplikation der erwarteten Drehrate mit einem ersten bzw. zweiten Toleranzfaktor berechnet, wobei der erste Toleranzfaktor größer und der zweite Toleranzfaktor kleiner als 1 ist. So könnte der erste Toleranzfaktor beispielsweise 1,6 betragen, während der zweite Toleranzfaktor beispielsweise mit 0,75 festgelegt ist.

In einer vorteilhaften Ausführungsform des erfindungsgemäßen Verfahrens ist der weitere Verfahrensschritt des Deaktivierens des aktivierten Gurtstraffers vorgesehen, wenn die tatsächliche Drehrate des Kraftfahrzeuges wieder kleiner als der obere Drehratengrenzwert und größer als der untere Drehratengrenzwert ist.

Nachfolgend wird die erfindungsgemäße Sicherheitsanordnung beschrieben, wobei bezüglich der hiermit erzielten Vorteile auf die oben stehende Beschreibung des erfindungsgemäßen Verfahrens verwiesen sein soll.

Die erfindungsgemäße Sicherheitsanordnung für ein Kraftfahrzeug weist einen Sicherheitsgurt, einen reversiblen Gurtstraffer, eine Erfassungseinrichtung zum Erfassen der Geschwindigkeit, des Lenkwinkels und der tatsächlichen Drehrate des Kraftfahrzeuges und eine Steuereinrichtung auf, mittels derer der Gurtstraffer aktivierbar und deaktivierbar ist. Unter dem Aktivieren bzw. Deaktivieren des Gurtstraffers ist das Auslösen bzw. das Rückgängigmachen der Auslösung zu verstehen. Es ist ferner eine Berechnungseinrichtung vorgesehen, mittels derer eine erwartete Drehrate des Kraftfahrzeuges um dessen Vertikalachse aus der Geschwindigkeit und dem Lenkwinkel und ein oberer und unterer Drehratengrenzwert an Hand der erwarteten Drehrate berechnet werden kann. Die Steuereinrichtung wirkt derart mit dem Gurtstraffer zusammen, dass der Gurtstraffer aktiviert wird, wenn die tatsächliche Drehrate des Kraftfahrzeuges größer als der obere Drehratengrenzwert oder kleiner als der untere Drehratengrenzwert ist.

In einer bevorzugten Ausführungsform der erfindungsgemäßen Sicherheitsanordnung wirkt die Steuereinrichtung derart mit dem Gurtstraffer zusammen, dass der Gurtstraffer ferner nur dann aktiviert wird, wenn die tatsächliche Drehrate des Kraftfahrzeuges für eine vorbestimmte Zeitdauer größer bzw. kleiner als der obere bzw. untere Drehratengrenzwert ist.

In einer weiteren bevorzugten Ausführungsform der erfindungsgemäßen Sicherheitsanordnung kann die vorbestimmte Zeitdauer in Abhängigkeit von der Geschwindigkeit des Kraftfahrzeuges verändert werden.

In einer vorteilhaften Ausführungsform der erfindungsgemäßen Sicherheitsanordnung kann die vorbestimmte Zeitdauer durch Erhöhen der Geschwindigkeit des Kraftfahrzeuges verringert werden.

In einer weiteren vorteilhaften Ausführungsform der erfindungsgemäßen Sicherheitsanordnung wirkt die Steuereinrichtung derart mit dem Gurtstraffer zusammen, dass der Gurtstraffer ferner nur dann aktiviert wird, wenn die Geschwindigkeit des Kraftfahrzeuges höher als ein vorbestimmter Geschwindigkeitsgrenzwert ist.

In einer bevorzugten Ausführungsform der erfindungsgemäßen Sicherheitsanordnung wird mit Hilfe der Berechnungseinrichtung der obere bzw. untere Drehratengrenzwert durch Multiplikation der erwarteten Drehrate mit einem ersten bzw. zweiten Toleranzfaktor berechnet, wobei der erste Toleranzfaktor größer und der zweite Toleranzfaktor kleiner als 1 ist.

In einer weiteren vorteilhaften Ausführungsform der erfindungsgemäßen Sicherheitsanordnung kann der aktivierte Gurtstraffer deaktiviert werden, wenn die tatsächliche Drehrate des Kraftfahrzeuges wieder kleiner als der obere Drehratengrenzwert und größer als der untere Drehratengrenzwert ist.

Die Erfindung wird im Folgenden an Hand von beispielhaften Ausführungsformen unter Bezugnahme auf die zugehörigen Zeichnungen näher erläutert. Es zeigen:
- Fig. 1: eine schematische Darstellung einer Ausfüh- rungsform der erfindungsgemäßen Sicher- heitsanordnung,
- Fig. 2: ein Ablaufdiagramm zur Erläuterung einer Ausführungsform des erfindungsgemäßen Verfahrens und
- Fig. 3: ein Diagramm zur Erläuterung des erfin- dungsgemäßen Verfahrens in bestimmten Fahr- situationen.

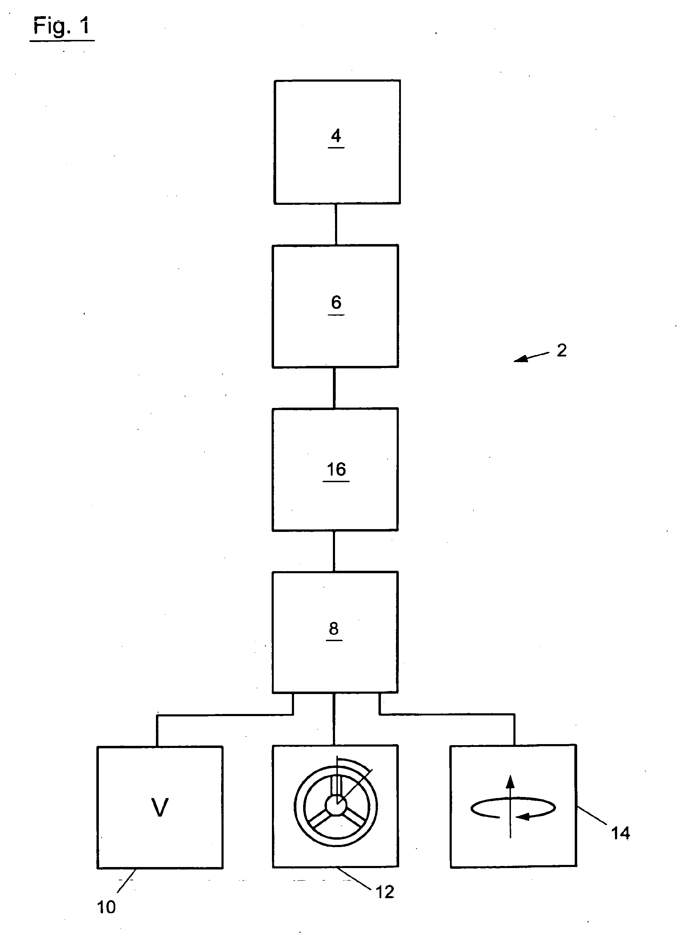

Fig. 1 zeigt eine schematische Darstellung einer Ausführungsform der erfindungsgemäßen Sicherheitsanordnung 2. Die Sicherheitsanordnung 2 weist einen nicht näher dargestellten Sicherheitsgurt auf. Der Sicherheitsgurt kann durch einen reversiblen Gurtstraffer 4 reversibel gestrafft werden. Der reversible Gurtstraffer 4 steht mit einer Steuereinrichtung 6 in Wirkverbindung, so dass der reversible Gurtstraffer 4 von der Steuereinrichtung 6 aktiviert und deaktiviert werden kann.

Die Sicherheitsanordnung 2 weist ferner eine Erfassungseinrichtung 8 zum Erfassen der Geschwindigkeit, des Lenkwinkels und der tatsächlichen Drehrate des Kraftfahrzeuges auf. Zu diesem Zweck steht die Erfassungseinrichtung 8 mit einem Geschwindigkeitssensor 10 zur Erfassung der Geschwindigkeit des Kraftfahrzeuges, einem Lenkwinkelsensor 12 zur Erfassung des Lenkwinkels des Kraftfahrzeuges und einem Drehratensensor 14 zur Erfassung der tatsächlichen Drehrate des Kraftfahrzeuges in Verbindung. Als Geschwindigkeitssensor 10 kann der ohnehin im Kraftfahrzeug vorhandene Geschwindigkeitssensor verwendet werden. Der Lenkwinkelsensor 12 kann beispielsweise die Stellung des Lenkrades oder die Stellung der Räder des Kraftfahrzeuges erfassen.

Es ist ferner eine Berechnungseinrichtung 16 vorgesehen, der die erfassten Geschwindigkeiten, Lenkwinkel und tatsächlichen Drehraten zugeführt werden können. Die Berechnungseinrichtung 16 kann zum einen eine erwartete Drehrate des Kraftfahrzeuges unter Zugrundelegung des erfassten Lenkwinkels und der Geschwindigkeit des Kraftfahrzeuges berechnen. Zum anderen kann die Berechnungseinheit 16 an Hand der erwarteten Drehrate einen oberen und unteren Drehratengrenzwert berechnen. Hierbei verwendet die Berechnungseinrichtung 16 so genannte Toleranzfaktoren.

Die somit erfassten und berechneten Daten können an die Steuereinrichtung 6 übermittelt werden, wo eine Auswertung der Daten stattfindet. Der Gurtstraffer 4 wird erst dann durch die Steuereinrichtung 6 aktiviert, wenn die Geschwindigkeit des Kraftfahrzeuges höher als ein vorbestimmter Geschwindigkeitsgrenzwert ist, die tatsächliche Drehrate des Kraftfahrzeuges größer als der obere Drehratengrenzwert oder kleiner als der untere Drehratengrenzwert ist und die tatsächliche Drehrate des Kraftfahrzeuges für eine vorbestimmte Zeitdauer größer bzw. kleiner als der obere bzw. untere Drehratengrenzwert ist. Die vorbestimmte Zeitdauer ist dabei umso geringer, je größer die Geschwindigkeit des Kraftfahrzeuges ist.

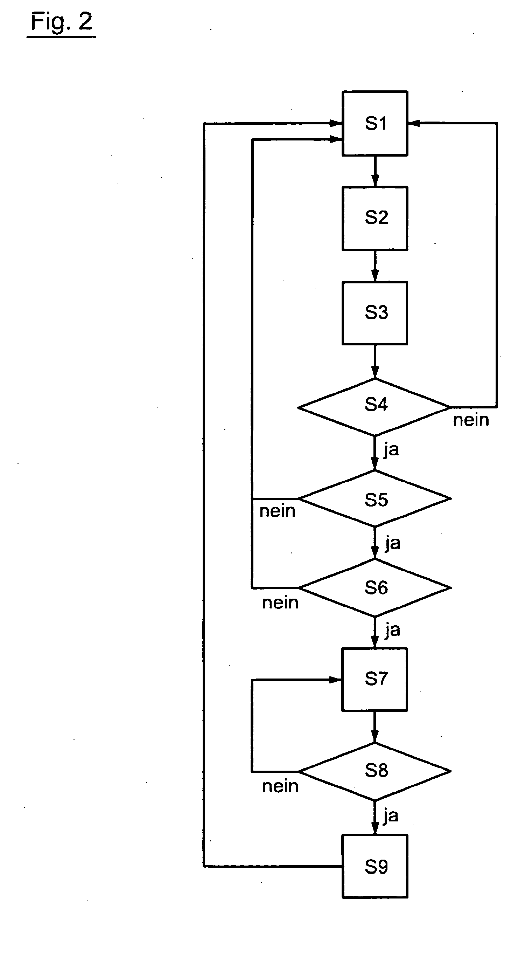

Nachstehend wird das der zuvor beschriebenen Sicherheitsanordnung 2 zu Grunde liegende erfindungsgemäße Verfahren unter Bezugnahme auf Fig. 2 beschrieben.

In einem ersten Verfahrensschritt S1 erfasst die Erfassungseinrichtung 8 über den Geschwindigkeitssensor 10 und den Lenkwinkelsensor 12 die Geschwindigkeit und den Lenkwinkel des Kraftfahrzeuges.

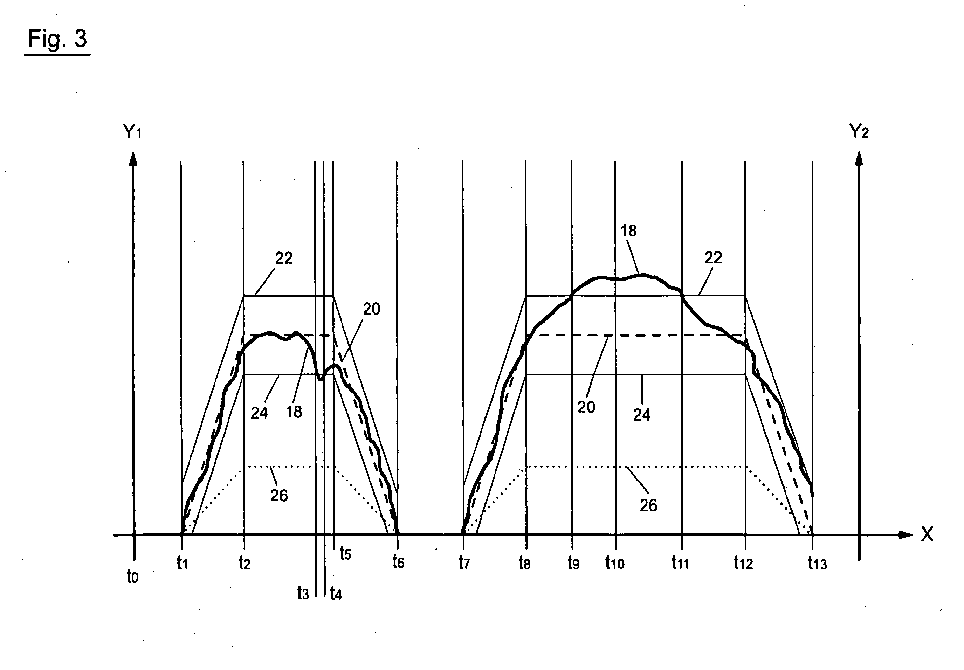

In einem nachfolgenden Verfahrensschritt S2 berechnet die Berechnungseinrichtung 16 die erwartete Drehrate des Kraftfahrzeuges um dessen Vertikalachse. Dies ist einfach auf Grundlage des erfassten Lenkwinkels sowie der erfassten Geschwindigkeit des Kraftfahrzeuges möglich. Bei der Berechnung der erwarteten Drehrate wird demzufolge vom Idealfall ausgegangen, nämlich dass das Kraftfahrzeug der gewünschten Lenkrichtung folgt, ohne über- oder untersteuert zu werden. An Hand der errechneten erwarteten Drehrate wird nun ein oberer und unterer Drehratengrenzwert ermittelt. Der obere Drehratengrenzwert wird durch Multiplikation der erwarteten Drehrate mit einem ersten Toleranzfaktor in Höhe von 1, 6 und der untere Drehratengrenzwert wird durch Multiplikation der erwarteten Drehrate mit einem zweiten Toleranzfaktor in Höhe von 0,75 errechnet. Auf diese Weise entsteht über die Zeit eine Hüllkurve um die erwartete Drehrate, auf die später in Fig. 3 näher eingegangen wird.

In einem nächsten Verfahrensschritt S3 erfasst die, Erfassungseinrichtung 8 über den Drehratensensor 14 die tatsächliche Drehrate des Kraftfahrzeuges. Es sei erwähnt, dass sowohl die tatsächliche Drehrate als auch der Lenkwinkel und die Geschwindigkeit des Kraftfahrzeuges kontinuierlich erfasst werden, um aus diesen die entsprechenden o. g. Werte zu berechnen.

Im Verfahrensschritt S4 wird eine Abfrage durchgeführt, ob die erfasste Geschwindigkeit des Kraftfahrzeuges höher als ein vorbestimmter Geschwindigkeitsgrenzwert ist, der im vorliegenden Beispiel bei 40 km/h festgelegt wurde. Ist dies nicht der Fall, so wird wieder mit Schritt S1 begonnen. Liegt die erfasste Geschwindigkeit jedoch oberhalb des Geschwindigkeitsgrenzwertes, so wird mit dem Verfahrensschritt S5 fortgefahren.

Im Verfahrensschritt S5 wird nun die Abfrage durchgeführt, ob die tatsächliche Drehrate des Kraftfahrzeuges größer als der obere Drehratengrenzwert oder kleiner als der untere Drehratengrenzwert ist. Sollte dies nicht der Fall sein, so beginnt die Prozedur wieder bei dem Verfahrensschritt S1. Anderenfalls wird mit dem Verfahrensschritt S6 fortgefahren.

Im Verfahrensschritt S6 wird erneut eine Abfrage durchgeführt, und zwar wird geprüft, ob die tatsächliche Drehrate des Kraftfahrzeuges bereits für eine vorbestimmte Zeitdauer größer bzw. kleiner als der obere bzw. untere Drehratengrenzwert ist. Sollte dies nicht der Fall sein, so werden zunächst die Schritte S1 bis S5 wiederholt, um anschließend - nachdem wieder Zeit verstrichen ist - erneut in Schritt S6 zu prüfen, ob die vorbestimmte Zeitdauer mittlerweile überschritten ist. Sollte die vorbestimmte Zeitdauer erreicht bzw. überschritten sein so wird mit dem Verfahrensschritt S7 fortgefahren.

Im Verfahrensschritt S7 ergeht von der Steuereinrichtung 6 ein entsprechendes Signal an den Gurtstraffer 4, der daraufhin aktiviert wird, so dass der Sicherheitsgurt gestrafft wird. Im Verfahrensschritt S8 wird geprüft, ob die tatsächliche Drehrate des Kraftfahrzeuges wieder kleiner als der obere Drehratengrenzwert und größer als der untere Drehratengrenzwert geworden ist. Sollte dies nicht der Fall sein, so bleibt der Gurtstraffer 4 aktiviert, anderenfalls erfolgt die Deaktivierung des Gurtstraffers im Verfahrensschritt S9, bevor die Prozedur erneut bei dem Verfahrensschritt S1 beginnt.

Nachfolgend wird die Funktionsweise der in Fig. 1 dargestellten Sicherheitsanordnung sowie des in Fig. 2 veranschaulichten Verfahrens unter Bezugnahme auf Fig. 3 an Hand von typischen Fahrsituationen erläutert.

In Fig. 3 ist auf der Achse X die Fahrzeit, auf der Achse Y₁ die tatsächliche Drehrate sowie der obere Drehratengrenzwert, der untere Drehratengrenzwert und die erwartete Drehrate und auf der Achse Y₂ der Lenkwinkel aufgetragen, wobei das Bezugszeichen 18 den Verlauf der tatsächlichen Drehrate, das Bezugszeichen 20 den Verlauf der erwarteten Drehrate, die Bezugszeichen 22 bzw. 24 den Verlauf des oberen bzw. unteren Drehratengrenzwertes und das Bezugszeichen 26 den Verlauf des Lenkwinkels bezeichnet. Es wird davon ausgegangen, dass sich das Kraftfahrzeug über die gesamte Zeit mit einer Geschwindigkeit bewegt, die oberhalb des vorbestimmten Geschwindigkeitsgrenzwertes liegt.

In dem Zeitraum t₀ bis t₁ fährt das Kraftfahrzeug, ohne dass der Fahrer ein Lenkmanöver durchführt. Im Zeitpunkt t₂ beginnt der Fahrer an dem Lenkrad zu drehen, bis dieses die gewünschte Lenkstellung zum Zeitpunkt t₃ erreicht hat. Wie aus Fig. 3 ersichtlich steigt demzufolge auch die erwartete Drehrate 20 des Kraftfahrzeuges an, wobei die Kurve der erwarteten Drehrate 20 stets von eine Hüllkurve umgeben ist, die sich aus dem oberen Drehratengrenzwert 22 und dem unteren Drehratengrenzwert 24 zusammensetzt. Zwischen den Zeitpunkten t₃ und t₄ untersteuert das Kraftfahrzeug - beispielsweise indem die ausgelenkten Räder auf der Fahrbahn rutschen - derart stark, dass die tatsächliche Drehrate 18 kleiner als der untere Drehratengrenzwert 24 ist. Die Dauer zwischen den Zeitpunkten t₃ und t₄ ist jedoch geringer als die vorbestimmte Zeitdauer, so dass der Gurtstraffer 4 nicht aktiviert wird. Zwischen den Zeitpunkten t₅ und t₆ bringt der Fahrer das Lenkrad aus der ausgelenkten Stellung wieder in die Ursprungsstellung zurück und fährt bis zum Zeitpunkt t₇ nur geradeaus, ohne das Lenkrad einzuschlagen.

Zwischen den Zeitpunkten t₇ und t₁₃ führt der Fahrer die gleiche Lenkbewegung durch wie zwischen den Zeitpunkten t₁ und t₆. Diesmal kommt es auf Grund der Fahrbahnbeschaffenheit o. ä. jedoch dazu, dass das Kraftfahrzeug übersteuert, indem das Heck desselben ausbricht. Dies führt dazu, dass die tatsächliche Drehrate 18 zwischen den Zeitpunkten t₉ und t₁₁ größer als der obere Drehratengrenzwert 22 ist. Zum Zeitpunkt t₁₀ wird die vorbestimmte Zeitdauer, in der die tatsächliche Drehrate größer als der obere Drehratengrenzwert sein darf, überschritten, d.h. zum Zeitpunkt t₁₀ wird der Gurtstraffer 4 aktiviert.

Wenn die tatsächliche Drehrate 18 wieder kleiner als der obere Drehratengrenzwert 22 ist, wie hier zum Zeitpunkt t₁₁, wird der Gurtstraffer wieder deaktiviert.

### Bezugszeichenliste

- 2: Sicherheitsanordnung
- 4: Gurtstraffer
- 6: Steuereinrichtung
- 8: Erfassungseinrichtung
- 10: Geschwindigkeitssensor
- 12: Lenkwinkelsensor
- 14: Drehratensensor
- 16: Berechnungseinrichtung
- 18: tatsächliche Drehrate
- 20: erwartete Drehrate
- 22: oberer Drehratengrenzwert
- 24: unterer Drehratengrenzwert
- 26: Lenkwinkel

- t₁ - t₁₃: Zeitpunkte

## Patentansprüche

1. Verfahren zur Steuerung eines reversiblen Gurtstraffers in einem Kraftfahrzeug mit den Verfahrensschritten
Erfassen der Geschwindigkeit und des Lenkwinkels des Kraftfahrzeuges,
Berechnen einer erwarteten Drehrate des Kraftfahrzeuges um dessen Vertikalachse aus der Geschwindigkeit und dem Lenkwinkel,
Berechnen eines oberen und eines unteren Drehratengrenzwertes an Hand der erwarteten Drehrate,
Erfassen der tatsächlichen Drehrate des Kraftfahrzeuges um dessen Vertikalachse,
Aktivieren des Gurtstraffers, wenn die tatsächliche Drehrate des Kraftfahrzeuges größer als der obere Drehratengrenzwert oder kleiner als der untere Drehratengrenzwert ist.

2. Verfahren nach Anspruch 1, **dadurch gekennzeichnet, dass** das Aktivieren des Gurtstraffers ferner erst dann erfolgt, wenn die tatsächliche Drehrate des Kraftfahrzeuges für eine vorbestimmte Zeitdauer größer bzw. kleiner als der obere bzw. untere Drehratengrenzwert ist.

3. Verfahren nach Anspruch 2, **dadurch gekennzeichnet, dass** die vorbestimmte Zeitdauer in Abhängigkeit von der Geschwindigkeit des Kraftfahrzeuges festgelegt wird.

4. Verfahren nach Anspruch 3, **dadurch gekennzeichnet, dass** die vorbestimmte Zeitdauer geringer ist, je höher die Geschwindigkeit des Kraftfahrzeuges ist.

5. Verfahren nach einem der Ansprüche 1 bis 4, **dadurch gekennzeichnet, dass** das Aktivieren des Gurtstraffers ferner erst dann erfolgt, wenn die Geschwindigkeit des Kraftfahrzeuges höher als ein vorbestimmter Geschwindigkeitsgrenzwert ist.

6. Verfahren nach einem der vorangehenden Ansprüche, **dadurch gekennzeichnet, dass** der obere bzw. untere Drehratengrenzwert durch Multiplikation der erwarteten Drehrate mit einem ersten bzw. zweiten Toleranzfaktor, berechnet wird, wobei der erste Toleranzfaktor größer und der zweite Toleranzfaktor kleiner als 1 ist.

7. Verfahren nach einem der vorangehenden Ansprüche mit dem weiteren Verfahrensschritt
Deaktivieren des aktivierten Gurtstraffers, wenn die tatsächliche Drehrate des Kraftfahrzeuges wieder kleiner als der obere Drehratengrenzwert und größer als der untere Drehratengrenzwert ist.

8. Sicherheitsanordnung für ein Kraftfahrzeug mit einem Sicherheitsgurt, einem reversiblen Gurtstraffer (4), einer Erfassungseinrichtung (8) zum Erfassen der Geschwindigkeit, des Lenkwinkels (26) und der tatsächlichen Drehrate (18) des Kraftfahrzeuges und einer Steuereinrichtung (6), mittels derer der Gurtstraffer (4) aktivierbar und deaktivierbar ist, **dadurch gekennzeichnet, dass** eine Berechnungseinrichtung (16) vorgesehen ist, mittels derer eine erwartete Drehrate (20) des Kraftfahrzeuges um dessen Vertikalachse aus der Geschwindigkeit und dem Lenkwinkel (26) und ein oberer und unterer Drehratengrenzwert (22, 24) an Hand der erwarteten Drehrate (20) berechenbar ist, wobei die Steuereinrichtung (6) derart mit dem Gurtstraffer (4) zusammenwirkt, dass der Gurtstraffer (4) aktivierbar ist, wenn die tatsächliche Drehrate (18) des Kraftfahrzeuges größer als der obere Drehratengrenzwert (22) oder kleiner als der untere Drehratengrenzwert (24) ist.

9. Sicherheitsanordnung nach Anspruch 8, **dadurch gekennzeichnet, dass** der Gurtstraffer (4) ferner nur dann aktivierbar ist, wenn die tatsächliche Drehrate (18) des Kraftfahrzeuges für eine vorbestimmte Zeitdauer größer bzw. kleiner als der obere bzw. untere Drehratengrenzwert (22, 24) ist.

10. Sicherheitsanordnung nach Anspruch 9, **dadurch gekennzeichnet, dass** die vorbestimmte Zeitdauer in Abhängigkeit von der Geschwindigkeit des Kraftfahrzeuges veränderbar ist.

11. Sicherheitsanordnung nach Anspruch 10, **dadurch gekennzeichnet, dass** die vorbestimmte Zeitdauer durch Erhöhen der Geschwindigkeit des Kraftfahrzeuges verringerbar ist.

12. Sicherheitsanordnung nach einem der Ansprüche 8 bis 11, **dadurch gekennzeichnet, dass** der Gurtstraffer (4) ferner nur dann aktivierbar ist, wenn die Geschwindigkeit des Kraftfahrzeuges höher als ein vorbestimmter Geschwindigkeitsgrenzwert ist.

13. Sicherheitsanordnung nach einem der Ansprüche 8 bis 12, **dadurch gekennzeichnet, dass** der obere bzw. untere Drehratengrenzwert (22, 24) durch Multiplikation der erwarteten Drehrate (20) mit einem ersten bzw. zweiten Toleranzfaktor berechenbar ist, wobei der erste Toleranzfaktor größer und der zweite Toleranzfaktor kleiner als 1 ist.

14. Sicherheitsanordnung nach einem der Ansprüche 8 bis 13, **dadurch gekennzeichnet, dass** der aktivierte Gurtstraffer (4) deaktivierbar ist, wenn die tatsächliche Drehrate (18) des Kraftfahrzeuges wieder kleiner als der obere Drehratengrenzwert (22) und größer als der untere Drehratengrenzwert (24) ist.

## Claims

1. A method for controlling a reversible seat belt pretensioner in a motor vehicle, comprising the following method steps:
detecting the speed and the steering angle of the vehicle;
calculating an expected turning rate of the vehicle about its vertical axis from the speed and the steering angle;
calculating an upper and a lower turning rate limiting value using the expected turning rate;
detecting the actual turning rate of the vehicle about its vertical axis;
activating the seat belt pretensioner if the actual turning rate of the vehicle is greater than the upper turning rate limiting value or is less than the lower turning rate limiting value.

2. A method according to claim 1, **characterized in that** the seat belt pretensioner is further only activated if the actual turning rate of the vehicle is greater than or less than the upper or lower turning rate limiting value for a predetermined period of time.

3. A method according to claim 2, **characterized in that** the predetermined period of time is established as a function of the speed of the vehicle.

4. A method according to claim 3, **characterized in that** the higher the vehicle speed, the shorter the predetermined period of time.

5. A method according to one of the claims 1 to 4, **characterized in that** the seat belt pretensioner is only activated if the speed of the vehicle is higher than a predetermined speed limiting value.

6. A method according to one of the preceding claims, **characterized in that** the upper or lower turning rate limiting value is calculated by multiplying the expected turning rate with a first or second tolerance factor, the first tolerance factor being greater than 1 and the second tolerance factor being less than 1.

7. A method according to one of the preceding claims, with the further method step of deactivating the activated seat belt pretensioner when the actual turning rate of the vehicle is again less than the upper turning rate limiting value and greater than the lower turning rate limiting value.

8. A safety arrangement for a motor vehicle, comprising a reversible seat belt pretensioner (4), a detection device (8) for detecting the speed, the steering angle (26) and the actual turning rate (18) of the vehicle, and a control device (6), by means of which it is possible to activate and deactivate the seat belt pretensioner (4), **characterized in that** a calculation device (16) is provided, by means of which it is possible to calculate an expected turning rate (20) of the motor vehicle about its vertical axis from the speed and the steering angle (26) and an upper and lower turning rate limiting value (22, 24) using the expected turning rate (20), wherein the control device (6) cooperates with the seat belt pretensioner (4) such that it is possible to activate the seat belt pretensioner (4) if the actual turning rate (18) of the motor vehicle is greater than the upper turning rate limiting value (22) or less than the lower turning rate limiting value (24).

9. A safety arrangement according to claim 8, **characterized in that** it is further only possible to activate the seat belt pretensioner (4) if for a predetermined period of time the actual turning rate (18) of the vehicle is greater than, or less than, the upper or lower turning rate limiting value (22, 24).

10. A safety arrangement according to claim 9, **characterized in that** the predetermined period of time can be varied as a function of the speed of the vehicle.

11. A safety arrangement according to claim 10, **characterized in that** the predetermined period of time can be reduced by increasing the speed of the vehicle.

12. A safety arrangement according to one of the claims 8 to 11, **characterized in that** it is further only possible to activate the seat belt pretensioner (4) when the speed of the motor vehicle is higher than a predetermined speed limiting value.

13. A safety arrangement according to one of the claims 8 to 12, **characterized in that** the upper or lower turning rate limiting value (22, 24) can be calculated by multiplying the expected turning rate (20) with a first or second tolerance factor, the first tolerance factor being greater than 1 and the second tolerance factor being less than 1.

14. A safety arrangement according to one of the claims 8 to 13, **characterized in that** it is possible to deactivate the activated seat belt pretensioner (4) when the actual turning rate (18) of the motor vehicle is again less than the upper turning rate limiting value (22) and greater than the lower turning rate limiting value (24).

## Revendications

1. Procédé pour la commande d'un tendeur de ceinture réversible dans un véhicule à moteur, comprenant les étapes de procédé suivantes :
détection de la vitesse et de l'angle de direction du véhicule à moteur,
calcul d'une vitesse de lacet attendue du véhicule à moteur autour de son axe vertical à partir de la vitesse et de l'angle de direction,
calcul d'une limite supérieure de vitesse de lacet et d'une limite inférieure à l'aide de la vitesse de lacet attendue,
détection de la vitesse de lacet réelle du véhicule à moteur autour de son axe vertical,
activation du tendeur de ceinture quand la vitesse de lacet réelle du véhicule à moteur est supérieure à la limite supérieure de vitesse de lacet ou inférieure à la limite inférieure de vitesse de lacet.

2. Procédé selon la revendication 1, **caractérisé en ce que** l'activation du tendeur de ceinture n'a lieu en outre que quand la vitesse de lacet réelle du véhicule à moteur est supérieure à la limite supérieure de vitesse de lacet ou inférieure à la limite inférieure de vitesse de lacet pendant une durée prédéterminée.

3. Procédé selon la revendication 2, **caractérisé en ce que** la durée prédéterminée est fixée en fonction de la vitesse du véhicule à moteur.

4. Procédé selon la revendication 3, **caractérisé en ce que** la durée prédéterminée est d'autant plus courte que la vitesse du véhicule à moteur est grande.

5. Procédé selon l'une des revendications 1 à 4, **caractérisé en ce que** l'activation du tendeur de ceinture n'a lieu en outre que quand la vitesse du véhicule à moteur est supérieure à une limite de vitesse prédéterminée.

6. Procédé selon l'une des revendications précédentes, **caractérisé en ce que** les limites supérieure et inférieure de vitesse de lacet sont calculées par multiplication de la vitesse de lacet attendue par un premier et un deuxième facteur de tolérance, respectivement, le premier facteur de tolérance étant supérieur à 1 et le deuxième facteur de tolérance inférieur à 1.

7. Procédé selon l'une des revendications comprenant en outre l'étape de procédé de désactivation du tendeur de ceinture activé quand la vitesse de lacet réelle du véhicule à moteur est à nouveau inférieure à la limite supérieure de vitesse de lacet et supérieure à la limite inférieure de vitesse de lacet.

8. Dispositif de sécurité pour un véhicule à moteur avec une ceinture de sécurité, un tendeur de ceinture réversible (4), un dispositif de détection (8) pour capter la vitesse, l'angle de direction (26) et la vitesse de lacet réelle (18) du véhicule à moteur et un dispositif de commande (6) au moyen duquel le tendeur de ceinture (4) peut être activé et désactivé, **caractérisé en ce qu'**il est prévu un dispositif de calcul (16) au moyen duquel une vitesse de lacet attendue (20) du véhicule à moteur autour de son axe vertical peut être calculée à partir de la vitesse et de l'angle de direction (26) et des limites supérieure et inférieure de vitesse de lacet (22, 24) à partir de la vitesse de lacet attendue (20), le dispositif de commande (6) coopérant avec le tendeur de ceinture (4) de telle façon que le tendeur de ceinture (4) puisse être activé quand la vitesse de lacet réelle (18) du véhicule à moteur est supérieure à la limite supérieure de vitesse de lacet (22) ou inférieure à la limite inférieure de vitesse de lacet (24).

9. Dispositif de sécurité selon la revendication 8, **caractérisé en ce que** le tendeur de ceinture (4) ne peut en outre être activé que quand la vitesse de lacet réelle (18) du véhicule à moteur est supérieure à la limite supérieure ou inférieure à la limite inférieure de vitesse de lacet (22, 24) pendant une durée prédéterminée.

10. Dispositif de sécurité selon la revendication 9, **caractérisé en ce que** la durée prédéterminée peut être modifiée en fonction de la vitesse du véhicule à moteur.

11. Dispositif de sécurité selon la revendication 10, **caractérisé en ce que** la durée prédéterminée peut être réduite par l'augmentation de la vitesse du véhicule à moteur.

12. Dispositif de sécurité selon l'une des revendications 8 à 11, **caractérisé en ce que** le tendeur de ceinture (4) ne peut en outre être activé que quand la vitesse du véhicule à moteur est supérieure à une limite de vitesse prédéterminée.

13. Dispositif de sécurité selon l'une des revendications 8 à 12, **caractérisé en ce que** la limite supérieure et la limite inférieure de vitesse de lacet (22, 24) peuvent être calculées par multiplication de la vitesse de lacet attendue (20) par un premier facteur de tolérance et un deuxième, respectivement, le premier facteur de tolérance étant supérieur à 1 et le deuxième facteur de tolérance inférieur à 1.

14. Dispositif de sécurité selon l'une des revendications 8 à 13, **caractérisé en ce que** le tendeur de ceinture (4) activé peut être désactivé quand la vitesse de lacet réelle (18) du véhicule à moteur est à nouveau inférieure à la limite supérieure de vitesse de lacet (22) et supérieure à la limite inférieure de vitesse de lacet (24).
